# EUROPÄISCHE PATENTSCHRIFT

(11) **EP 3 045 285 B1**
(45) Veröffentlichungstag und Bekanntmachung des Hinweises auf die Patenterteilung: **01.06.2022**
(21) Anmeldenummer: 15200202.8
(22) Anmeldetag: 15.12.2015
(51) Int. Cl.: B29C 35/08, B29C 70/46, H05B 33/00, B29C 35/02, F21K 99/00, B29C 70/00, H05B 45/00

(54) **VORRICHTUNG ZUM AUFHEIZEN EINES VERBUNDWERKSTOFFS MIT TEMPERATURABHÄNGIGEN VERARBEITUNGSEIGENSCHAFTEN UND DAMIT ZUSAMMENHÄNGENDE VERFAHREN**
DEVICE FOR HEATING A COMPOSITE MATERIAL WITH TEMPERATURE-DEPENDENT PROCESSING PROPERTIES AND RELATED METHOD
DISPOSITIF DE CHAUFFAGE D'UNE MATIERE COMPOSITE PRESENTANT DES CARACTERISTIQUES DE PREPARATION EN FONCTION DE LA TEMPERATURE ET PROCEDE ASSOCIE

(30) Priorität: 22.12.2014 DE 102014018934
(43) Veröffentlichungstag der Anmeldung: 20.07.2016
(73) Patentinhaber: Airbus Defence and Space GmbH, 85521 Ottobrunn (DE)
(72) Erfinder: Engel, Franz, 81539 München (DE); Orth, Tilman, 80469 München (DE); Weimer, Christian, 81539 München (DE); Rehm, Wolfgang, 88138 Hergensweiler (DE)
(74) Vertreter: LKGLOBAL Lorenz & Kopf PartG mbB Patentanwälte

(56) Entgegenhaltungen:
- EP-A1- 1 591 470
- DE-A1- 10 331 272
- DE-A1-102011 116 639
- DE-B4-102011 116 639
- DE-C1- 10 214 827
- DE-U1- 20 201 493
- US-A- 6 004 123
- US-A1- 2005 230 600
- US-A1- 2008 186 734
- US-B1- 6 683 421

## Beschreibung

### Gebiet der Erfindung

Die vorliegende Erfindung betrifft allgemein eine Vorrichtung zum Aufheizen eines Werkstoffs, bestehend aus mindestens zwei Komponenten, dessen eine Komponente durch das Aufheizen erweicht und der gesamte Werkstoff somit besser geformt und gefügt und/oder aufgeschmolzen und/oder ausgehärtet und/oder flüssig gehalten werden kann. Bei dem Verbundwerkstoff kann es sich insbesondere um faserverstärkten Kunststoff (FVK) handeln, wobei die Art des Matrixwerkstoffes, ob Duroplast oder Thermoplast, bestimmt mit welchem Ziel die Wärmebehandlung erfolgt. Weiterhin betrifft die Erfindung ein Verfahren zur Herstellung der vorgenannten Vorrichtung sowie ein Verfahren zur Herstellung eines Bauteils, insbesondere aus einem Faserverbundwerkstoff, unter Verwendung der Vorrichtung.

### Hintergrund der Erfindung

Einleitend genannte Vorrichtungen und Verfahren kommen insbesondere beim sogenannten Preformen und beim Aushärten von Faserverbundbauteilen unter erhöhter Temperatur zum Einsatz. Hierbei hat die Temperatur des Bauteils großen Einfluss auf den Herstellungsprozess und die Qualität des Endprodukts. Eine möglichst präzise, an die Bedürfnisse und Anforderungen des Bauteils angepasste Temperaturführung ist deshalb von großem Interesse. Insbesondere Leichtbauteile mit hohem Funktionsintegrationsgrad weisen lokal erheblich unterschiedliche Geometrien auf, z.B. mit erheblich unterschiedlichen Wandstärken oder sogar Materialien, so dass ein Bedürfnis besteht, die Temperatur des Werkstoffs bzw. des halbfertigen Bauteils lokal einstellen zu können.

Bekannte Vorrichtungen der eingangs genannten Art weisen z.B. Autoklaven oder Öfen auf. Diese weisen jedoch insbesondere den Nachteil auf, dass sie sehr teuer in der Anschaffung und im laufenden Betrieb sind und eine lokal einstellbare Temperatur des Werkstoffs nicht oder nur in sehr begrenztem Umfang mittels komplizierter, teurer und beheizbarer Werkzeuge möglich ist, welche sich thermisch sehr träge verhalten.

DE 10 2011 116639 A1 beschreibt ein Verfahren zum Herstellen eines faserverstärkten Kunststoff-Bauteils. Das Verfahren umfasst die Schritte Einbringen von Faserhalbzeug und Harz in ein Form-Werkzeug, Abwarten einer Teilaushärtung des faserverstärkten Kunststoff-Bauteils im Form-Werkzeug bis zu einem entnahmefähigen Zustand, Entnehmen des teilausgehärteten faserverstärkten Kunststoff-Bauteils aus dem Form-Werkzeug und Positionieren im Strahlbereich einer Infrarot-Bestrahlungsanlage, sowie Aktivieren der Infrarot-Bestrahlungsanlage und Endaushärtung im Bestrahlungsfeld.

### Zusammenfassung der Erfindung

Die Aufgabe der Erfindung besteht daher darin, einfache und kostengünstige Mittel bereitzustellen, welche eine verbesserte, besonders geringe Betriebskosten verursachende, Temperaturführung von Verbundwerkstoffen ermöglichen.

Die Aufgabe wird gelöst durch die Licht emittierende Einheit nach dem unabhängigen Patentanspruch. Die Erfindung ist demnach gekennzeichnet durch die Merkmale des unabhängigen Anspruchs und wird im Folgenden durch Bezugnahme auf Ausführungsformen beschrieben.

Die erfindungsgemäße Licht emittierende Einheit nach Anspruch 1 - im Folgenden mit LEE abgekürzt - weist wenigstens ein Leuchtmittel zur Emission von Licht zum Aufheizen eines Verbundwerkstoffs auf, wobei der Werkstoff durch das Aufheizen aufgeschmolzen und/oder erweicht und/oder ausgehärtet und/oder flüssig gehalten werden kann, wobei die Lichtemission des Leuchtmittels bereichsweise unterschiedlich steuerbar oder auch - besonders bevorzugt - regelbar ist.

Die LEE ist ausgestaltet, dass in dem aufzuheizenden Werkstoff beliebige Temperaturverteilungen heterogen, realisiert werden, welche ebenfalls zeitlich veränderlich sein können. Ein bevorzugtes Anwendungsbeispiel der LEE liegt in der Erhitzung von Harz eines kohlenstofffaserverstärkten Kunststoffs (CFK) als Matrixwerkstoff, dessen Verarbeitungseigenschaften sich mit der Temperatur verändern. Ohne darauf beschränkt zu sein wird die Erfindung im Folgenden größtenteils - sofern nichts anderes angegeben ist - anhand dieses bevorzugten Anwendungsbeispiels erläutert, wobei jedoch auch insbesondere andere (faserverstärkte) Kunststoffe mit der erfindungsgemäßen LEE bereichsweise unterschiedlich erhitzt werden können. Die LEE ist Teil einer Oberschale und/oder Unterschale eines Werkzeugs zur Herstellung eines Bauteils aus dem Verbundwerkstoff, wobei die LEE wenigstens einen Temperatursensor zur bereichsweisen Erfassung von Temperaturen des Verbundwerkstoffs in dem Werkzeug aufweist und eine Steuerungseinheit vorgesehen ist, welche dazu eingerichtet ist, in Abhängigkeit von den von dem Temperatursensor erfassbaren Temperaturen die Lichtemission des wenigstens einen Leuchtmittels zu steuern oder zu regeln. Die LEE ist ausgestaltet, in dem Verbundwerkstoff eine heterogene Temperaturverteilung zu realisieren, so dass der Verbundwerkstoff bereichsweise unterschiedlich erhitzt wird. Die LEE ist in wenigstens zwei Bereiche unterteilt, welche sich nicht überlappen. Das wenigstens eine Leuchtmittel weist wenigstens eine Licht emittierende Folie, LEF, auf, deren Lichtemission bereichsweise steuerbar ist.

Unter "bereichsweise unterschiedlich" ist zu verstehen, dass die LEE in wenigstens zwei Bereiche unterteilt ist, welche sich nicht überlappen. In diesen Bereichen kann die Lichtemission des wenigstens einen Leuchtmittels unabhängig voneinander gesteuert bzw. geregelt werden, z.B. in Bezug auf ihre Lichtintensität oder Wellenlänge. Besonders bevorzugt ist die LEE auch dazu eingerichtet, dass die Lichtemission in den Bereichen zeitlich unabhängig voneinander steuerbar bzw. regelbar ist. Besonders bevorzugt weist die LEE mindestens zwei Leuchtmittel auf, welche sich in jeweils unterschiedlichen, vorstehend beschriebenen Bereichen der LEE befinden und in der vorstehend beschriebenen Weise unabhängig voneinander bezüglich ihrer Lichtemission gesteuert bzw. geregelt werden können.

Die Wellenlänge des emittierbaren Lichts kann im sichtbaren, infraroten oder ultravioletten Bereich liegen. Die LEE ist je nach Anforderung dazu eingerichtet, durch Aussendung bzw. Emittieren elektromagnetischer Wellen in Form von Licht mittels des wenigstens einen Leuchtmittels das Harz in dem CFK aufzuheizen, aufzuschmelzen und/oder erweichen und/oder auszuhärten und oder flüssig zu halten, und zwar insbesondere unterschiedlich in den wenigstens zwei Bereichen. Es wird durch die unterschiedliche Ansteuerung der Leuchtmittel ermöglicht, dass zur selben Zeit oder zeitlich verschoben in allen oder nur in auswählbaren Bereichen der LEE Licht emittierbar ist. CFK, welcher in den Abstrahlbereich der Leuchtmittel positionierbar ist, kann dadurch zum einen flächendeckend bestrahlt und dadurch erfindungsgemäß erhitzt werden, wenn in allen Bereichen der LEE Licht emittiert wird. Besonders vorteilhaft ist jedoch, dass - sofern nur in ausgewählten Bereichen Licht emittiert wird oder in einem Bereich intensiver Licht emittiert wird als in einem anderen Bereich - gezielt, lokal und unterschiedlich bestimmte Bereiche bzw. Stellen des CFK bestrahlt und damit erhitzt werden können. Die erfindungsgemäße LEE leistet somit einen Beitrag, die Erhitzung des CFK gezielt auf seine Anforderungen und Bedürfnisse abzustimmen. So lässt sich beispielsweise ein Bereich, in welchem CFK mit einer dünneren Materialstärke vorliegt, weniger stark erhitzen als ein Bereich, in welchem der CFK mit einer dickeren Materialstärke vorliegt.

Mit anderen Worten wird eine gezielte Behandlung eines zu fertigenden (halbfertigen) CFK-Bauteils mit lokal unterschiedlichen Wärmeeinträgen (z.B. für unterschiedliche Bauteildicken, Bauteilgeometrieen) oder die gezielte Behandlung von Fließwegen ermöglicht. Weiterhin wird eine sehr einfache und dynamische Prozessregelung mit steuerbaren Temperaturprofilen ermöglicht. Dadurch, dass gezielt dort Wärme eingebracht werden kann, wo sie benötigt wird, und dies in der gewünschten Intensität erfolgen kann, zeichnet sich die erfindungsgemäße LEE durch einen besonders hohen Energieeffizienzgrad aus. Mit der erfindungsgemäßen LEE kann ferner - insbesondere im Vergleich zu vorbekannten, sehr trägen Autoklav- oder Ofenprozessen - besonders schnell eine Temperaturveränderung des CFK bewirkt werden. Weiterhin ist keine Handhabung von Fluiden notwendig, was den apparativen Aufwand verringert und die Funktionsführung erleichtert.

Die erfindungsgemäße LEE ist in der vorstehend erläuterten Weise insbesondere dazu eingerichtet,
- mit Harz vorimpregnierte CFK-Halbzeuge (Prepreg), deren Verformbarkeit von der Temperatur abhängt und welche in ein Werkzeug zur Herstellung eines Bauteils aus CFK eingelegt sind, in dem Werkzeug bzw. der Form zu drapieren,
- Kunststoffe (Thermoplaste) in dem Werkzeug aufzuschmelzen,
- Kunststoffe (Duroplaste) in dem Werkzeug auszuhärten,
- die Viskosität eines flüssigen Kunststoffes in dem Werkzeug zu steuern,
- ein harzfreies Halbzeug in dem Werkzeug vor einem Injizieren des Harzes vorzuwärmen und
- das Werkzeug vor dem Einlegen eines fertigen bzw. unfertigen Bauteils vorzuwärmen.

Gemäß einem Beispiel ist vorgesehen, dass die Leuchtmittel Licht emittierende Dioden (LED) aufweisen, deren Lichtemission wenigstens teilweise unabhängig voneinander steuerbar ist. Der Einsatz von LED ermöglicht insbesondere eine sehr hohe Energieeffizienz, wodurch insbesondere Betriebskosten weiter gesenkt werden können. Im Stand der Technik, insbesondere im Autoklav- oder Ofenprozess, kommt es ferner immer wieder zu lokalen sogenannten Hotspots. Dies kann durch den Einsatz von LED vermieden werden. Die LED können beispielsweise flächig auf der LEE aufgebracht und fest verbaut sein. Weiterhin können die LED in zusammenschaltbaren Modulen, ggfs. mit entsprechenden Zusatzelementen, angeordnet sein oder als Netze aufgebaut sein.

Gemäß der Erfindung ist vorgesehen, dass die Leuchtmittel wenigstens eine Licht emittierende Folie aufweist, deren Lichtemission bereichsweise steuerbar ist. Eine derartige Folie bietet insbesondere den Vorteil, dass sie besonders wenig Bauraum in Anspruch nimmt, die Fertigung der LEE vereinfacht und besonders einfach und kostengünstig ausgeführt sein kann. Die Folie kann als separate LEE in einem halboffenen oder geschlossenen Werkzeug integriert sein. Die Folie kann ferner insbesondere organische Leuchtdioden umfassen und in ein Werkzeug eingelegt, tiefgezogen oder gedruckt werden. Weiterhin bietet die Folie den Vorteil, dass eine typischerweise in einem Werkzeug und Verfahren vorgesehene Folie oder ein Hilfsmittel ersetzt werden kann, welche ein Vakuum oder einen Infusions-Prozess vorsehen.

Weiterhin ist in einer Ausführungsform vorgesehen, dass die Folie von einer Seite derart behandelt ist, dass Licht nur in einer Richtung emittiert wird. Hierdurch wird ein Beitrag geleistet, dass die Lichtstrahlung besonders effektiv und effizient für das Aufheizen des Werkstoffs genutzt werden kann. Außerdem ist vorteilhaft vorgesehen, dass mehrere Licht emittierende Folien übereinander gelegt sind, wodurch eine besonders hohe Intensität der emittierten Strahlung erreicht werden kann. Ferner könnte die Folie auch milchig trüb ausgestaltet sein, wodurch eine besonders gleichmäßige Verteilung des emittierten Lichts ermöglicht werden kann und die Leuchtdichte gegenüber den relativ kleinen lokalen Lichtquellen homogenisiert werden kann. Ebenfalls vorteilhaft vorgesehen ist, dass die Folie derart gestaltet ist, dass sie optische Eigenschaften aufweist, durch welche das Licht besonders effektiv und effizient in Wärme umwandelbar ist.

Gemäß einem Beispiel kann die LEE Teil einer Oberschale und/oder Unterschale eines Werkzeugs zur Herstellung eines Bauteils aus dem Verbundwerkstoff sein. Weist die LEE beispielsweise LED auf, so können diese in die Oberschale und/oder die Unterschale des Werkzeugs integriert oder auf dieser aufgebracht sein. Weist die LEE eine vorstehend beschriebene Licht emittierende Folie auf, so kann diese als Schicht auf der Oberschale und/oder der Unterschale des Werkzeugs aufgebracht sein. Die LEE kann dabei derart orientiert und eingerichtet sein, dass ihre Lichtemission und damit auch ihre Wärmestrahlung in Richtung der jeweils anderen Werkzeugschale erfolgen können. Damit wird insbesondere ermöglicht, dass die jeweils andere Werkzeugschale oder zwischen den Werkzeugschalen befindlicher CFK erhitzt werden kann. Ebenfalls ist in diesem Zusammenhang vorteilhaft vorgesehen, dass die LEE derart orientiert und eingerichtet ist, dass ihre Lichtemission und damit auch ihre Wärmestrahlung zusätzlich oder alternativ in Richtung der Werkzeugschale erfolgen kann, welcher die LEE zugeordnet ist, das heißt sie kann ihre eigene Oberschale bzw. Unterschale erwärmen.

Ebenfalls kann die LEE passend zwischen der Oberschale oder Unterschale eines Werkzeugs und zwischen den Werkzeugschalen befindlichem Werkstoff andererseits positionierbar sein, wozu die LEE kein Teil der Werkzeugschalen zu sein braucht.

Die LEE kann mehrere miteinander verbindbare und wieder trennbare LEE-Module aufweisen. Die LEE-Module können beispielsweise in einem offenen Werkzeug über dem Werkstoff oder auf einer Unterlage des Werkzeugs positioniert werden. Die LEE-Module können gemeinsam eine Form bilden, welche besonders variabel ist. Die LEE-Module bieten einen besonders flexiblen Aufbau der LEE, welche an die Bedürfnisse und Anforderungen eines herzustellenden Bauteils besonders gut angepasst werden kann.

Die LEE kann weiterhin dazu eingerichtet sein, eine Druckkraft auf den Verbundwerkstoff auszuüben. Dazu kann die LEE einen oder mehrere Stempel aufweisen, welche gezielt an bestimmten ausgewählten Stellen auf das CFK pressbar ist bzw. sind, um in diesen Bereichen einen besonders hohen Wärmeeintrag und Druck zu ermöglichen.

Gemäß einem Beispiel sind die Leuchtmittel, besonders bevorzugt LED, außerhalb des Werkzeugs angeordnet und können Licht in eine Folie, Oberschale oder Unterschale "pumpen". Dabei können insbesondere Glasfasern oder andere Licht leitende Materialien eine netzartige oder krakenartige Struktur bilden, in welche Licht von den Leuchtmitteln emittiert wird. Eine derartige Struktur kann vorteilhaft über dem aufzuheizenden Werkstoff positioniert, in das Werkzeug eingelegt oder in einen Vakuumaufbau integriert sein. Besonders bevorzugt ist vorgesehen, dass die Glasfasern bzw. Licht leitenden Materialien so beschaffen sind, dass das Licht wieder aus ihnen austreten und auf das aufzuheizende Material treffen kann. In diesem Zusammenhang sind insbesondere drei im Folgenden erläuterte vorteilhafte Varianten vorgesehen.

Gemäß einem Beispiel sind die Leuchtmittel seitlich neben der Folie, Unterschale oder Oberschale angeordnet und dazu eingerichtet, Licht in die Folie bzw. Unterschale bzw. Oberschale zu emittieren, wobei die Folie bzw. Unterschale bzw. Oberschale dazu eingerichtet ist, das Licht derart zu verteilen und/oder umzulenken, dass es in Richtung von in dem Werkzeug befindlichem Verbundwerkstoff abstrahlbar ist. Diese Variante ermöglicht, dass die Leuchtmittel besonders nah, besonders bevorzugt ohne Abstand an der Folie, Unterschale bzw. Unterschale positioniert werden können, was insbesondere dahingehend von Vorteil ist, dass nur besonders geringe Wärmeleitverluste auftreten.

Gemäß einem Beispiel ist Licht der Leuchtmittel über Glasfasern in die Folie bzw. Unterschale bzw. Oberschale emittierbar und gemäß der ersten Variante verteilbar und umlenkbar. Anstatt Glasfasern können dabei auch andere lichtleitende Materialien zum Einsatz kommen. Wesentlich ist, dass durch die Glasfasern bzw. andere Licht leitende Materialien das Leuchtmittel und das bestrahlte Element voneinander getrennt bzw. entkoppelt sind, wodurch insbesondere die Kühlung der LEE vereinfacht wird.

Gemäß einem weiteren Beispiel sind die Leuchtmittel oberhalb der Folie oder Oberschale angeordnet und dazu eingerichtet, Licht in die Folie bzw. Oberschale über eine Vielzahl von Glasfasern zu emittieren, so dass Licht in Richtung von in dem Werkzeug befindlichen Verbundwerkstoff abstrahlbar ist. Das Licht, insbesondere von LED, kann somit von oben über eine krakenartige Struktur von Glasfasern über viele Punkte in die Folie bzw. Oberschale eingekoppelt und über eine beispielsweise trübe Folie verteilt werden. Ebenfalls wird ermöglicht, dass auf eine Umlenkung gemäß der ersten Variante verzichtet werden kann, wenn Licht mittels der Glasfasern bereits in einer zur Bestrahlung des Werkstoffs geeigneten Orientierung emittiert wird. Ebenso wie in der zweiten Variante ist es auch bei der dritten Variante möglich, dass anstatt der Glasfasern andere geeignete, Licht leitende Materialien genutzt werden.

Besonders kann ferner vorgesehen sein, dass die LEE wenigstens einen Temperatursensor zur bereichsweisen Erfassung von Temperaturen eines Verbundwerkstoffs in dem Werkzeug oder dem wenigstens einen Leuchtmittel aufweist und eine Steuerungseinheit vorgesehen ist, welche dazu eingerichtet ist, in Abhängigkeit von den von dem Temperatursensor erfassbaren Temperaturen die Lichtemission des wenigstens einen Leuchtmittels zu steuern oder zu regeln. Diese Ausführungsform ermöglicht insbesondere die Automation und Kontrolle der Temperaturführung.

Ein beispielhaftes Verfahren zur Herstellung eines Bauteils aus einem Verbundwerkstoff umfasst die Schritte:
- Bereitstellen von Verbundwerkstoff, insbesondere Harz eines CFK, zur Herstellung des Bauteils,
- Bereitstellen einer vorstehend beschriebenen, erfindungsgemäßen Licht emittierenden Einheit (LEE) und
- bereichsweise unterschiedliches Emittieren von Licht durch entsprechende Steuerung des wenigstens einen Leuchtmittels, bevorzugt zweier Leuchtmittel in jeweils einem unterschiedlichen, weiter oben beschriebenen Bereich der LEE, so dass der Verbundwerkstoff bereichsweise unterschiedlich aufgeheizt wird.

Bei der Durchführung des Verfahrens kann vorteilhaft vorgesehen sein, dass entweder ein Abstand zwischen dem Leuchtmittel und dem aufzuheizenden Werkstoff eingehalten wird oder dass beide durch eine transparente Schutzschicht, z.B. aus Glas oder Kunststoff, voneinander beabstandet sind. Bei der Variante mit der Schutzschicht könnte auch vorteilhaft ein Druck auf den Werkstoff aufgebaut werden. Ebenfalls kann die LEE auch - ohne dass ein Werkzeug notwendig ist - direkt auf dem aufzuheizenden Werkstoff positioniert und an diesen, ähnlich einer Folie, welche in einem Vakuumprozess eingesetzt wird, durch Erzeugen eines Vakuums angesaugt werden. Die Steuerung der Intensität der Lichtemission kann z.B. in einer besonders einfachen Ausführungsform durch das direkte Anlegen einer Spannung an die LEE oder durch Induktion erfolgen. Ebenfalls ist es möglich, dass die Steuerung automatisiert ist und mittels einer Steuerungseinheit, auf welcher ein entsprechendes Computerprogramm hinterlegt ist, erfolgen kann.

Ein beispielhaftes Verfahrens umfasst ferner die Verfahrensschritte
- Bereitstellen eines vorstehend beschriebenen Temperatursensors und einer Steuerungseinheit,
- bereichsweises Erfassen von Temperaturen von Verbundwerkstoff in dem Werkzeug oder der Leuchtmittel mittels des Temperatursensors, Erzeugen entsprechender Temperaturwerte und Übermitteln an die Steuerungseinheit sowie
- bereichsweise unterschiedliches Steuern oder Regeln der Lichtemission der Leuchtmittel mittels der Steuerungseinheit in Abhängigkeit von den empfangenen Temperaturwerten.

Um die Temperatur des Werkstoffs bereichsweise unterschiedlich einstellen zu können, wird entweder die Temperatur des Werkstoffs selbst gemessen und als Steuerungs- bzw. Regelgröße verwendet oder aber die Temperatur des wenigstens einen Leuchtmittels, z.B. zweier LED, welche in unterschiedlichen Bereichen der LEE angeordnet sind. Bei der zweiten Alternative wird von der Temperatur des jeweiligen Leuchtmittels auf die Temperatur des Werkstoffs im Bereich der jeweiligen LED geschlossen.

Das beispielhafte Verfahren dient der Herstellung einer Licht emittierenden Einheit in einem Werkzeug und ist gekennzeichnet durch das Aufbringen wenigstens einer Licht emittierenden Schicht auf dem Werkzeug, so dass die Schicht Licht bereichsweise unterschiedlich in Richtung von in das Werkzeug einführbarem Verbundwerkstoff emittieren kann. Die Schicht kann als Alternative zu den vorstehend beschriebenen Leuchtmitteln eingesetzt werden und beispielsweise durch Aufdampfen, Bestäuben, Einlassen einer Form des Werkzeugs, durch Bestreichen Sputtern, Molekularstrahlepitaxie oder Galvanisierung erzeugt werden. Es können in mehreren Durchgängen auch mehrere Schichten übereinander aufgebracht werden, welche in der Lage sind, Licht bereichsweise unterschiedlich zu emittieren.

### Kurze Beschreibung der Figuren

Im Folgenden werden Ausführungsbeispiele der Erfindung anhand der Zeichnung näher erläutert. Hierbei zeigt:
- Fig. 1: eine schematische Vorderansicht eines Ausführungsbeispiels einer Licht emittierenden Einheit (LEE).
- Fig. 2: eine schematisch perspektivische Ansicht der LEE nach Fig. 1 in anderem Maßstab und
- Fig. 3 bis 9: verschiedene weitere Ausführungsbeispiele einer Licht emittierenden Einheit.

### Detaillierte Beschreibung von Ausführungsbeispielen

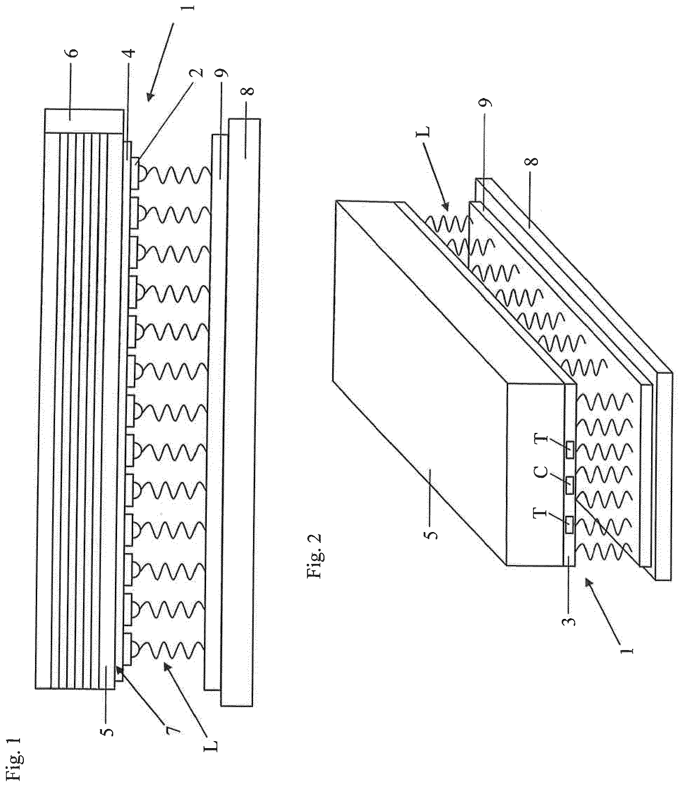

Fig. 1 und 2 zeigen ein Ausführungsbeispiel einer LEE 1 welche eine Vielzahl von Leuchtmitteln in Form einer Vielzahl von Licht emittierenden Dioden (LED) 2 aufweist, welche nebeneinander angeordnet in einem LED-Array 3 zusammengefasst sind. Das emittierte Licht L ist durch die wellenförmigen Linien in Fig. 1 und 2 dargestellt.

Der LED-Array 3 weist eine Trägerplatine 4 mit Anschlüssen auf und ist fest an der Unterseite eines Kühlkörpers 5 angebracht, durch welchen den LED-Array 3 kühlende Luft strömt. Die kühlende Luft wird durch einen Lüfter 6 angesaugt, durch den Kühlkörper 5 bewegt und auf der dem Lüfter 6 entgegengesetzten Seite wieder ausgeblasen. Zwischen dem LED-Array 3 und dem Kühlkörper 5 befindet sich eine Schicht aus einer Wärmeleitpaste 7, welche den Wärmeübergang zwischen dem LED-Array 3 und dem Kühlkörper 5 fördert.

Die LED 2 sind einzeln und unabhängig voneinander mittels einer in dem LED-Array 3 angeordneten Steuerungseinheit C über nicht dargestellte Kommunikationsleitungen derart ansteuerbar, dass sie Licht unterschiedlicher Intensität emittieren können, so dass ein auf einer Platte 8 unterhalb des LED-Arrays 3 befindlicher Verbundwerkstoff 9 in Form eines Laminats bereichsweise unterschiedlich aufgeheizt werden kann. Die Steuerungseinheit C empfängt dabei Temperaturwerte von Temperatursensoren T, welche ebenfalls in dem LED-Array 3 angeordnet, mit der Steuerungseinheit C über nicht dargestellte Kommunikationsleitungen verbunden und derart positioniert und eingerichtet sind, dass Temperaturen im Bereich einer ausgewählten LED gemessen werden und entsprechende Messwerte generiert werden können. Obwohl die LEE 1 eine Vielzahl der genannten Temperatursensoren T umfasst, sind der Übersichtlichkeit halber lediglich zwei Temperatursensoren T dargestellt, welche jeweils einem Bereich der LEE 1zugeorndte sind. Die Messwerte sind an die Steuerungseinheit C mittels der Kommunikationsleitungen übermittelbar. Auf der Steuerungseinheit C kann ein Computerprogramm hinterlegt sein, mittels welchem die Lichtemission der LED, insbesondere derjenigen LED, von welcher ein Temperaturwert erhalten worden ist, steuerbar und besonders bevorzugt regelbar ist, wobei die Steuerungseinheit den enthaltenen Temperaturwerten Temperaturen des Laminats im Bereich der LED zuordnet, in welchem die Temperatur durch den Temperatursensor T gemessen worden ist.

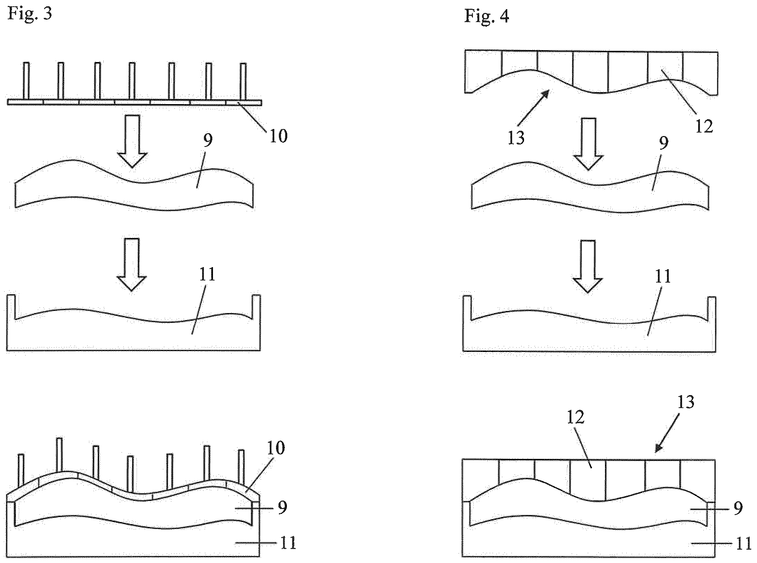

Durch Fig. 3 bis 9 ist jeweils Material, das sich unter Temperatureinfluss aufweicht oder aufschmilzt, 9 in Form des Harzes eines kohlenstofffaserverstärkten Kunststoffs (CFK) gezeigt, welcher aufgeheizt wird.

Fig. 3 zeigt dabei insgesamt sieben nebeneinander angeordnete Stempel 10, welche jeweils mit einem nicht dargestellten LEE bestückt sind (oberer Teil von Fig. 3) und den Werkstoff 9, welcher in einer Unterschale 11 eines Werkzeugs zur Herstellung eines Bauteils aus dem Werkstoff 9 bereitgestellt worden ist, flächig oder lokal bestrahlt und optional kompaktiert wird (unterer Teil von Fig. 3). Die Stempel 10 weisen dazu beispielsweise nicht gezeigte Hydraulikelemente oder Stellmotoren auf. Weiterhin sind die Stempel 10 im Bereich ihrer Flächen, welche in Kontakt mit dem Werkstoff 9 oder der Unterschale 11 kommen können, derart beschaffen, dass sie sich an die Kontur des Werkstoffs 9 bzw. der Unterschale 11 anpassen und eine Druckkraft auf sie ausüben können.

Fig. 4 zeigt mehrere nebeneinander angeordnete, miteinander verbindbare und wieder trennbare LEE-Module 12, welche jeweils mit einem nicht dargestellten LEE bestückt sind und zur Ausbildung einer festen Oberschale 13 des Werkzeugs fest miteinander verbunden sind. Die LEE werden auf den Werkstoff 9 zubewegt, und zwar soweit, dass Letzterer berührt wird (unterer Teil von Fig. 4). Alternativ kann auch ein in Fig. 4 nicht gezeigter Abstand zwischen den LEE und dem Werkstoff 9 verbleiben oder es könnte eine nicht dargestellte transparente Schicht zwischen den LEE und dem Werkstoff 9 angeordnet sein.

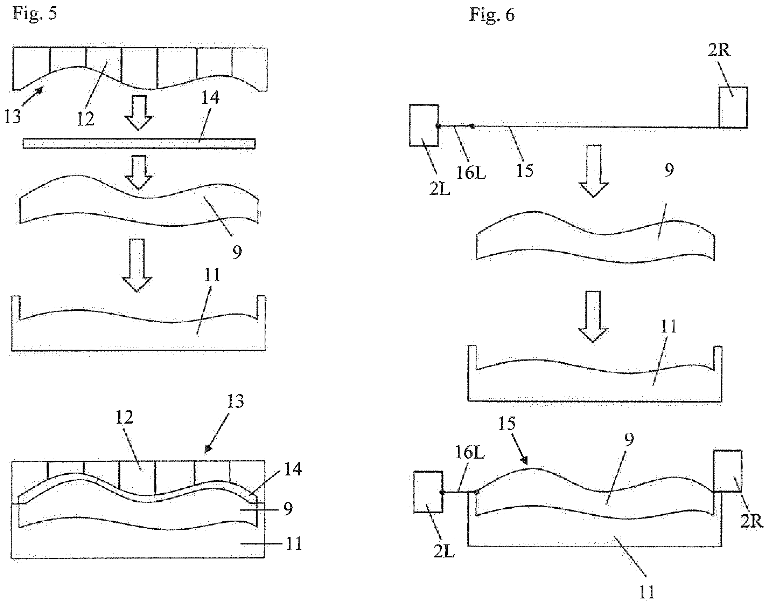

Fig. 5 unterscheidet sich von Fig. 4 dadurch, dass eine Folie 14 zwischen den LEE und dem Werkstoff 9 angeordnet ist, welche durch Erzeugen eines Vakuums zwischen Werkstoff 9 und LEE auf den Werkstoff 9 gezogen worden ist. Alternativ kann die Folie 14 auch auf die Oberschale 13 des Werkzeugs gezogen werden.

Fig. 6 zeigt eine LEE 1, welche eine Licht emittierende Folie (LEF) 15 aufweist, welche durch Erzeugen eines Vakuums zwischen Folie 15 und Werkstoff 9 auf den Werkstoff 9 gezogen wird (unterer Teil von Fig. 6). Anstatt der Folie 15 kann auch ein nicht dargestelltes Netz von LED vorgesehen sein. Fig. 6 zeigt weiterhin. 6, dass LED direkt oder indirekt über Glasfasern Licht in die Folie 15 leiten können, in welchen das Licht durch geeignete, nicht dargestellte Mittel flächig verteilt und derart umgeleitet wird, dass es auf das Material 9 treffen und es aufheizen kann. Die in Fig. 6 rechts dargestellte LED 2R ist ohne Abstand seitlich neben der Folie angeordnet und leitet das Licht direkt in die Folie 15 ein. Die in Fig. 6 links dargestellte LED 2L hingegen ist mit Abstand seitlich neben der Folie 15 angeordnet, emittiert Licht und leitet dies über eine Glasfaser 16L in die Folie 15 in welcher es wie vorstehend beschrieben verteilt und umgelenkt wird.

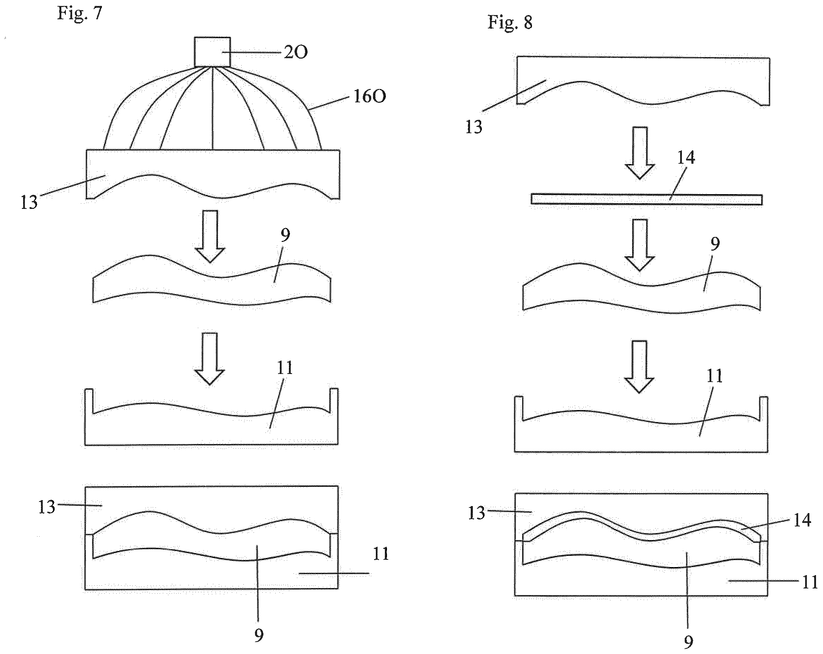

Fig. 7 unterscheidet sich von Fig. 4 dadurch, dass eine einzige Oberschale 13 dargestellt ist, welche nicht aus einzelnen LEE-Modulen 12 besteht. Weiterhin ist oberhalb der Oberschale 13 eine LED 2O angeordnet, welche über ein Bündel von Glasfasern 16O von der LED 2O emittiertes Licht krakenartig in die Oberschale 13 leitet, so dass das Licht in Richtung des Werkstoffs 9 abstrahlbar ist.

Fig. 8 unterscheidet sich von Fig. 5 dadurch, dass eine einzige Oberschale 13 dargestellt ist, welche nicht aus LEE-Modulen 12 besteht.

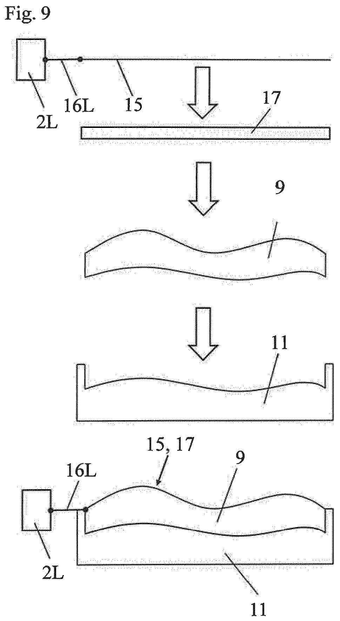

Fig. 9 unterscheidet sich von Fig. 6 insbesondere dadurch, dass die rechte LED 2R entfällt und zwischen der Licht emittierenden Folie 15 und dem Werkstoff 9 eine herkömmliche Folie 17 für einen VAP-Prozess gezogen ist.

## Patentansprüche

1. Licht emittierende Einheit, LEE, (1), umfassend wenigstens ein Leuchtmittel (2) zur Emission von Licht (L) zum Aufheizen eines Verbundwerkstoffs (9), wobei der Werkstoff (9) durch das Aufheizen aufgeschmolzen und/oder erweicht und/oder ausgehärtet und/oder flüssig gehalten werden kann, wobei die Lichtemission des Leuchtmittels (2) bereichsweise unterschiedlich steuerbar ist,
wobei die LEE (1) Teil einer Oberschale (13) und/oder Unterschale (11) eines Werkzeugs zur Herstellung eines Bauteils aus dem Verbundwerkstoff (9) ist,
wobei die LEE (1) wenigstens einen Temperatursensor (T) zur bereichsweisen Erfassung von Temperaturen des Verbundwerkstoffs (9) in dem Werkzeug aufweist und eine Steuerungseinheit (C) vorgesehen ist, welche dazu eingerichtet ist, in Abhängigkeit von den von dem Temperatursensor (T) erfassbaren Temperaturen die Lichtemission des wenigstens einen Leuchtmittels (2) zu steuern oder zu regeln,
wobei die LEE ausgestaltet ist, in dem Verbundwerkstoff (9) eine heterogene Temperaturverteilung zu realisieren, so dass der Verbundwerkstoff bereichsweise unterschiedlich erhitzt wird;
wobei die LEE in wenigstens zwei Bereiche unterteilt ist, welche sich nicht überlappen;
**dadurch gekennzeichnet, dass**
das wenigstens eine Leuchtmittel (2) wenigstens eine Licht emittierende Folie, LEF, (15) aufweist, deren Lichtemission bereichsweise steuerbar ist.

2. LEE (1) nach Anspruch 1, wobei die LEF (15) von einer Seite derart behandelt ist, dass Licht (L) nur in einer Richtung emittiert wird.

3. LEE (1) nach einem der vorstehenden Ansprüche, wobei die LEE (1) mehrere miteinander verbindbare und wieder trennbare LEE-Module (12) aufweist.

4. LEE (1) nach einem der vorstehenden Ansprüche, wobei die LEE (1) dazu eingerichtet ist, eine Druckkraft auf den Verbundwerkstoff (9) auszuüben.

## Claims

1. Light-emitting unit, LEE, (1), comprising at least one light-emitting means (2) for emitting light (L) for heating a composite material (9), wherein the material (9) can be melted and/or softened and/or cured and/or kept liquid on account of the heating, wherein the light emission of the light-emitting means (2) is regionally variably controllable,
wherein the LEE (1) is part of an upper shell (13) and/or bottom shell (11) of a tool for producing a component part from the composite material (9),
wherein the LEE (1) has at least one temperature sensor (T) for regionally capturing temperatures of the composite material (9) in the tool and a control unit (C) is provided, which is configured to control the light emission of the at least one light-emitting means (2) in open-loop or closed-loop fashion in dependence on the temperatures capturable by the temperature sensor (T),
wherein the LEE is designed to implement a heterogeneous temperature distribution in the composite material (9) so that the composite material is regionally variably heated;
wherein the LEE is divided into at least two regions that do not overlap;
**characterized in that**
the at least one light-emitting means (2) has at least one light-emitting film, LEF, (15), whose light emission is regionally controllable.

2. LEE (1) according to Claim 1, wherein the LEF (15) is treated from one side such that light (L) is emitted only in one direction.

3. LEE (1) according to either of the preceding claims, wherein the LEE (1) has a plurality of LEE modules (12) which are able to be connected to one another and separated again.

4. LEE (1) according to one of the preceding claims, wherein the LEE (1) is configured to exert a pressure force on the composite material (9).

## Revendications

1. Unité émettrice de lumière, LEE, (1), comprenant au moins un moyen luminescent (2) destiné à émettre de la lumière (L) pour chauffer un matériau composite (9), le matériau (9) étant fondu et/ou ramolli par le chauffage et/ou pouvant être durci et/ou maintenu liquide, l'émission de lumière par le moyen luminescent (2) pouvant être commandée de différentes manières par zones,
la LEE (1) faisant partie d'une coque supérieure (13) et/ou d'une coque inférieure (11) d'un outil de fabrication d'un composant à partir du matériau composite (9),
la LEE (1) comportant au moins un capteur de température (T) destiné à détecter par zones des températures du matériau composite (9) dans l'outil et une unité de commande (C) étant prévue qui est conçue pour commander ou réguler l'émission de lumière par l'au moins un moyen luminescent (2) en fonction des températures détectables par le capteur de température (T),
la LEE étant conçue pour réaliser une distribution de températures hétérogène dans le matériau composite (9) de sorte que le matériau composite soit chauffé de différentes manières par zones ;
la LEE étant divisée en au moins deux zones qui ne se chevauchent pas ;
**caractérisée en ce que**
l'au moins un moyen luminescent (2) comporte au moins un film émetteur de lumière, LEF, (15), dont l'émission de lumière peut être commandée par zones.

2. LEE (1) selon la revendication 1, le LEF (15) étant traité d'un côté de manière à ce que la lumière (L) ne soit émise que dans une direction.

3. LEE (1) selon l'une des revendications précédentes, la LEE (1) comportant une pluralité de modules LEE (12) qui peuvent être reliés les uns aux autres et à nouveau séparés.

4. LEE (1) selon l'une des revendications précédentes, la LEE (1) étant conçue pour exercer une force de pression sur le matériau composite (9).
